# EUROPEAN PATENT SPECIFICATION

(11) **EP 1 371 855 B1**
(45) Date of publication and mention of the grant of the patent: **19.07.2006**
(21) Application number: 03076575.4
(22) Date of filing: 23.05.2003
(51) Int. Cl.: F15B 11/15, F15B 11/20, A01B 3/42

(54) **Plough-turning device**
Pflugwendevorrichtung
Dispositif de retournement d'une charrue réversible

(30) Priority: 11.06.2002 NL 1020827
(43) Date of publication of application: 17.12.2003
(73) Proprietor: Actuant Corporation, Glendale, Wisconsin 53209-3703 (US)
(72) Inventor: Leblanc, Jacobus Johannes Josephus Ronald, 7693 TB Sibculo (NL); Beld, Peter Everhardus Johannes, 7637 PC Oud Ootmarsum (NL); Kooistra, Ronald, 7521 ZS Enschede (NL)
(74) Representative: Brookhuis, Hendrik Jan Arnold

(56) References cited:
- EP-A- 0 416 206
- EP-A- 0 758 718
- DE-A- 3 218 631
- DE-A- 3 908 985
- FR-A- 2 720 123

## Description

The invention relates to a valve assembly for a hydraulic actuating device for a reversible plough in accordance with the preamble of claim 1.

EP 0 416 206 and EP 0 758 718 disclose valve assemblies for reversible ploughs, wherein EP 0 416 206 discloses a valve assembly according to the preamble of claim 1.

The agricultural sector makes widespread use of what are known as reversible ploughs. A reversible plough is attached to the back of a tractor using a construction which allows ploughing to be carried out on one of the two sides of the tractor as desired. To turn a plough in order to enable ploughing to be carried out on the other side of the tractor, it is necessary firstly to move the plough into a position which corresponds to a narrow plough width before the plough is rotated about its turning axis, which lies substantially horizontally and in the longitudinal direction of the tractor. Then, the plough has to be moved back to the desired plough width. The two primary movements of the reversible plough described above are usually realized by two hydraulic cylinders. The pressurized hydraulic fluid which is to be supplied to these cylinders is usually provided by a hydraulic pump unit which is present on the tractor and comprises a pump and a reservoir.

The known valve assemblies have the drawback that the structure is relatively complex is therefore undesirably expensive.

It is an object of the invention to eliminate the above drawback. Furthermore, it is an object of the invention to provide a valve assembly which in practice is highly reliable.

According to the present invention, these objects are achieved by a valve assembly according to claim 1.

Further advantageous aspects of the valve assembly are described in the subclaims.

Preferred embodiments of the valve assembly according to the invention and the other components of a hydraulic actuating device for a reversible plough according to the invention will be explained in more detail below with reference to the drawing, in which:
Figure 1 shows a hydraulic circuit diagram of the valve assembly according to the invention,
Figure 2 shows a hydraulic circuit diagram of a hydraulic actuating device for a reversible plough provided with a preferred embodiment of the valve assembly according to the invention,
Figure 3 shows the valve assembly of the circuit diagram shown in Fig. 2 designed as a hydraulic valve block,
Figure 4 shows the valve block shown in Figure 3 in a first switching position,
Figure 5 shows the valve block shown in Figure 3 in a second switching position,
Figure 6 shows the valve block shown in Figure 3 in a third switching position,
Figure 7 shows the valve block shown in Figure 3 in a fourth switching position,
Figure 8 shows a hydraulic circuit diagram of a hydraulic actuating device for a reversible plough provided with a further preferred embodiment of the valve assembly according to the invention, and
Figure 9 shows the valve assembly of the circuit diagram shown in Fig. 8 designed as a hydraulic valve block.

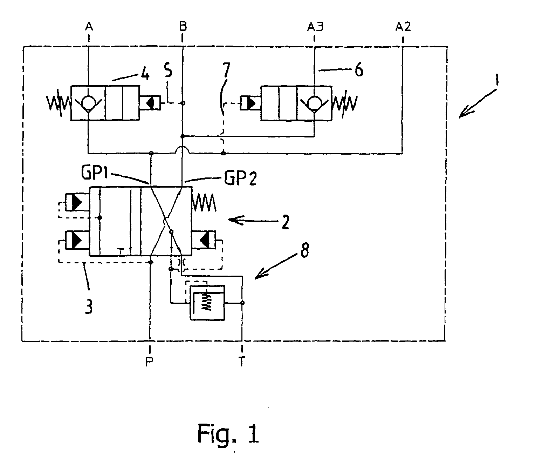

Figure 1 shows a hydraulic circuit diagram of a valve assembly 1 for a hydraulic actuating device of a reversible plough.

The valve assembly 1 is designed to turn the plough on command by firstly moving the plough into a narrow position, then turning the plough and then moving it back into a wide position.

The valve assembly 1 comprises:
- a pressure connection P and a return connection T, which can respectively be connected to means for supplying pressurized hydraulic fluid and to a reservoir,
- a first and second connection A, B which can be connected to a turning cylinder,
- a third connection A2, which can be connected to a width adjustment cylinder, in such a manner that, when hydraulic fluid is supplied to the width adjustment cylinder via the third connection A2, the plough moves in the direction of its wide position, and
- a fourth connection A3, which can be connected to a width adjustment cylinder, in such a manner that, when hydraulic fluid is supplied to the width adjustment cylinder via the fourth connection A3, the plough moves in the direction of its narrow position.

The valve assembly 1 also comprises a pressure-actuated control valve circuit 2 having a first controlled port GP1 and a second controlled port GP2, in such a manner that the first and second controlled ports GP1, GP2, in a first position, are respectively connected to the return connection T and the pressure connection P and, in a second position, are respectively connected to the pressure connection P and the return connection T.

The control valve circuit 2 has a control pressure feature 3 which is in communication with the pressure connection P, in such a manner that, at a defined control pressure, the control valve circuit moves from the first position into the second position.

The first controlled port GP1 is in communication with the first connection A and with the third connection A2, and the second controlled port GP2 is in communication with second connection B and with the fourth connection A3.

In the connecting section between the first connection A and the first controlled port GP1 there is a first pressure-actuated sequence circuit 4 with a nonreturn valve function in the direction of the first controlled port GP1. This nonreturn valve function can be eliminated under the influence of a control pressure in an associated first control pressure passage 5 which is in communication with the second controlled port GP2.

In the connecting section between the fourth connection A3 and the second controlled port GP2 there is a second pressure-actuated sequence circuit 6 with a nonreturn valve function in the direction of the second controlled port. This nonreturn valve function can be eliminated under the influence of a control pressure in an associated second control pressure passage 7 which is in communication with the first controlled port GP1.

In addition to the main components explained above, the valve assembly 1 also comprises a return pressure generator circuit 8 in the connecting section between the control valve circuit 1 and the return connection T.

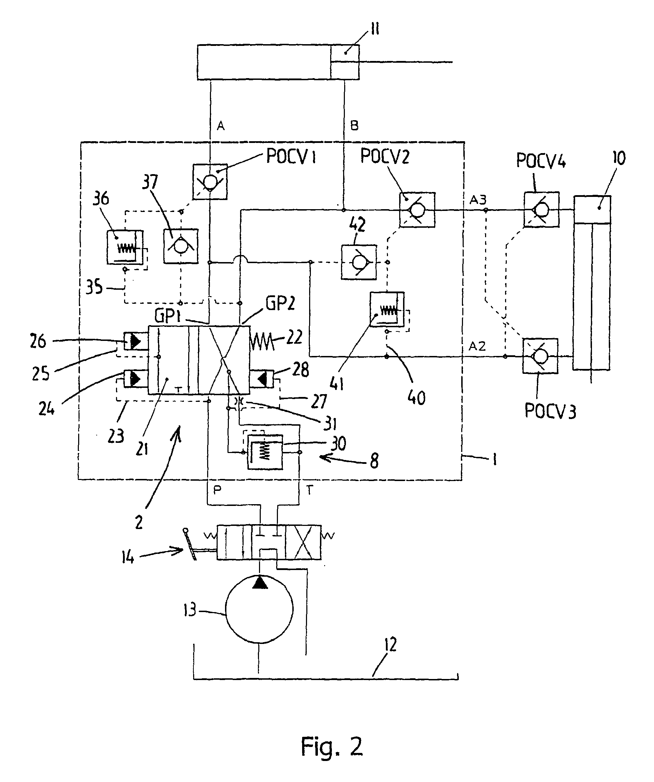

The structure and function of this return pressure generator circuit 8 will be explained in more detail with reference to Figures 2 - 7.

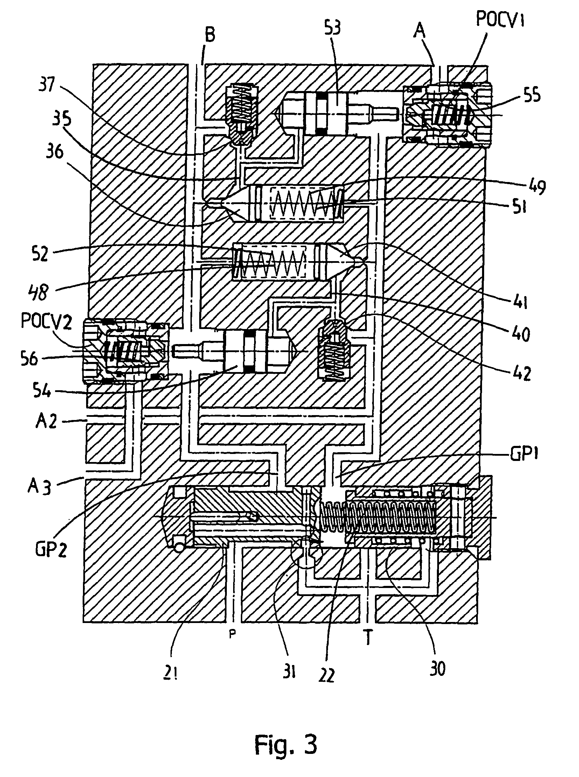

Figure 2 shows a preferred embodiment of the valve assembly which has been extremely diagrammatically depicted in Figure 1. In addition to the valve assembly 1, which, as can be Seen from Figure 3 - 7, is preferably accommodated in its entirety in a single valve block, this figure also shows the other components of a hydraulic actuating device for a reversible plough. In the present example, these other components are as follows:
- a double-acting hydraulic cylinder 10, which is used to adjust the plough width of the plough. In the context of the present invention, the cylinder 10 is referred to as a width adjustment cylinder 10.
- a double-acing hydraulic cylinder 11, which is used to turn the plough between a first turned position, in which the plough is located on one side of the tractor, and a second turned position, in which the plough is located on the other side of the tractor. In the context of the present invention, the cylinder 11 is referred to as a turning cylinder 11.

The pressurized hydraulic fluid which is required for actuation of the cylinders 10 and 11 is provided by a hydraulic unit on the tractor. This unit comprises a substantially unpressurized reservoir 12 for the hydraulic fluid and a hydraulic pump 13. On the tractor there are also two connections, preferably quick-fit connections, for the hydraulic actuating device according to the invention. Between the connection on the one hand and the reservoir 12 and the pump 13 on the other hand there is a 4/3 slide valve 14, which in this case is designed to be manually actuated. The valve 14 has neutral middle position, in which the connections are closed off, while in the other two positions in each case one of the two connections is connected to the reservoir 12 and the other of the two connections is connected to the pump 13.

In the embodiment shown, the control valve circuit 2 comprises a pressure-actuated spring-return 4/2 slide valve 21 which can adopt two positions.

In the first position, the starting position shown in Figures 1, 2 and 3, the first controlled port GP1 and the second controlled port GP2 are respectively connected to the return connection T and the pressure connection P, and in a second position, are respectively connected to the pressure connection P and the return connection T.

The slide valve 21 has a return spring 22 which presses the slide valve 21 into its first position.

The slide valve 21 also has a first control pressure feature 23 which is in communication with the pressure connection P, in such a manner that at 24 a control pressure acts on the sliding body, pressing the sliding body in the direction of the second position, so that at a defined control pressure in the said control feature 23 the slide valve 21 moves from the first position into the second position.

The slide valve 21 also has a second control pressure passage 25 which, in the second position of the slide valve 21, is in communication with the pressure connection P, so that the sliding body is then pressed in the direction of the second position at 26.

Furthermore, the slide valve 21 has a third control pressure passage 27 which presses the sliding body in the direction of the first position at 28. This third control pressure feature is in communication with a return passage 29 between the slide valve 21 and the return connection T, wherein the return pressure generator 8 generates a return pressure.

The return pressure generator 8 comprises a pressure-regulating device 30, which may of adjustable design and which is arranged in the corresponding liquid path between the slide valve 21 and the return connection T. A throttle member 31 is incorporated in the same path, in parallel with the pressure-regulating device 30.

The first pressure-actuated sequence circuit 4 is present in the connecting section between the first connection A and the first controlled port GP1. In this case, this sequence circuit 4 comprises a pressure-actuated nonreturn valve POCV1 which closes in the direction of the first controlled port GP1, it being possible for the closing action of the nonreturn valve POCV1 to be eliminated under the influence of a control pressure in an associated first control pressure passage 35 which is in communication with the second controlled port GP2.

A sequence valve 36 which opens if the pressure on the side of the second controlled port GP2 exceeds a defined pressure value, so that the nonreturn valve POCV1 then opens, is incorporated in the control pressure passage 35. A nonreturn valve 37 arranged in parallel with the sequence valve 36 is provided in order to enable liquid to flow back out of the control pressure passage 35 between the valve 36 and the piston 53 of nonreturn valve POCV1 if the controlled port GP2 is connected to the reservoir 12.

A second pressure-actuated sequence circuit 6 is present in the connecting section between the fourth connection A3 and the second controlled port GP2. This sequence circuit 6 in this case comprises a pressure-actuated nonreturn valve POCV2, which closes in the direction of the first controlled port GP2. The closing action of the said nonreturn valve POCV2 can be eliminated under the influence of a control pressure in an associated second control pressure passage 40 which is in communication with the first controlled port GP1.

A sequence valve 41 which opens if the pressure on the side of the first controlled port GP1 exceeds a defined pressure value, so that the nonreturn valve POCV2 then opens, is incorporated in the control pressure passage 40. A nonreturn valve 42 which is arranged in parallel with the sequence valve 41 is provided in order to allow liquid to flow back out of the control pressure passage 40 between the valve 41 and the piston 54 of nonreturn valve POCV2 if the controlled port GP1 is connected to the reservoir 12.

In each connecting section between one of the connections A2 and A3 and the associated connection of the width adjustment cylinder 10 there is a pressure-actuated nonreturn valve POCV3 and POCV4, having a control pressure line which is connected to the other connecting section to the width adjustment cylinder 10. These nonreturn valves POCV3 and POCV4 have no influence on the way in which the valve assembly functions.

The connections A and B are directly connected via lines without further valves to the associated connections of the turning cylinder 11.

A preferred embodiment of the realization of the valve assembly 1 shown in Figure 2 in a single valve block as well as its operation will now be explained in more detail with reference to Figures 3 - 7.

Figures 3 - 7 use the same reference numbers as the circuit diagram shown in Figure 2.

Figure 3 clearly shows the symmetrical structure of the valve block, the first and second sequence circuits being of substantially identical design.

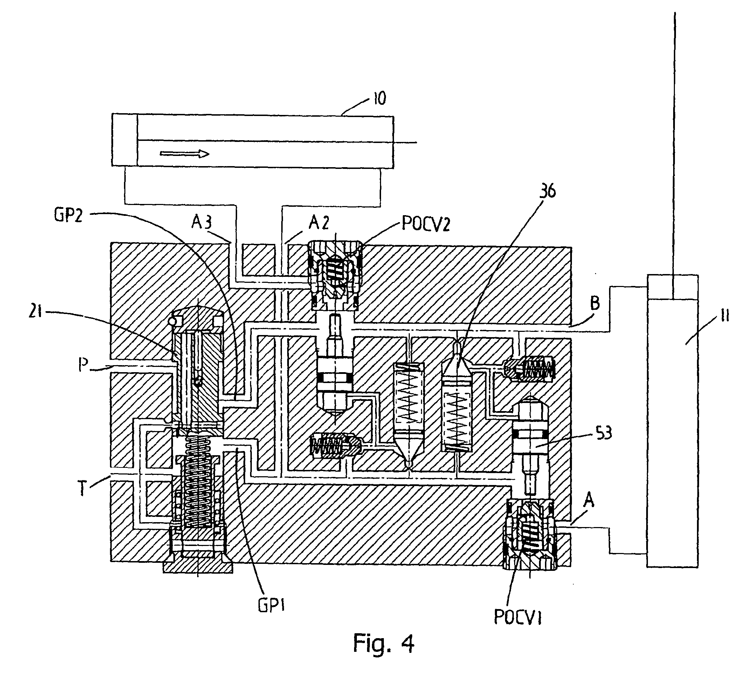

The slide valve 21 and the return pressure generator 8 with pressure-regulating valve 30 and throttle member 31 are virtually identical to the slide valve 61 and pressure-regulating valve 70 in EP 0 758 718, which are explained in detail in that document. This explanation is deemed to be incorporated in the present application by reference. Furthermore, the mode of action can be seen clearly from Figures 4 - 7.

The sequence valves 36, 41 each have a sliding body 49, 48 with a conical point at the front side, which is able to close off a through-opening in the associated control pressure passage 35, 40. That part of the conical point which projects into the through-opening in each case forms an opening pressure surface of the sliding body 49, 48.

On the rear side, a spring 51, 52 presses against the sliding body 49, 48. Also, the rear side of each sliding body 49, 50 forms a closing pressure surface, the closing pressure surface of slide body 49 being in communication with the first controlled port GP1 and the closing pressure surface of sliding body 48 being in communication with the second controlled port GP2.

The nonreturn valves POCV1 and POCV2 each comprise a control piston 53, 54, which on one side is subjected to load from the hydraulic pressure in the associated control pressure passage 35, 40 if the sequence valve 36, 41 incorporated therein is open.

The nonreturn valves POCV1 and POCV2 also comprise a valve body 55,56, respectively, which is pressed towards its seat by a spring. The valve body 55, 56 can be pressed away from its seat by means of the associated control piston 53, 54, in order in this way to eliminate the nonreturn valve action.

The way in which the valve assembly shown operates will now be explained in more detail with reference to Figures 4 - 7.

When hydraulic fluid is supplied to the pressure connection P, with the slide valve 21 in the first position, as shown in Figure 4, this fluid flows past the slide valve 21 towards the second controlled port GP2 and via the nonreturn valve POCV 2 to the connection A3. This hydraulic pressure from the pump also reaches the connection B via the second controlled port GP2. Since the nonreturn valve POCV1 is closed, the turning cylinder 11 will remain inactive. The piston rod of the width adjustment cylinder 10 will extend, however, since liquid can flow out of the rod-side cylinder space to the return connection T and then to reservoir 12, via the connection A2.

As a result, the width adjustment cylinder 10 will move the plough in the direction of the narrow position (cf. arrow in Figure 4).

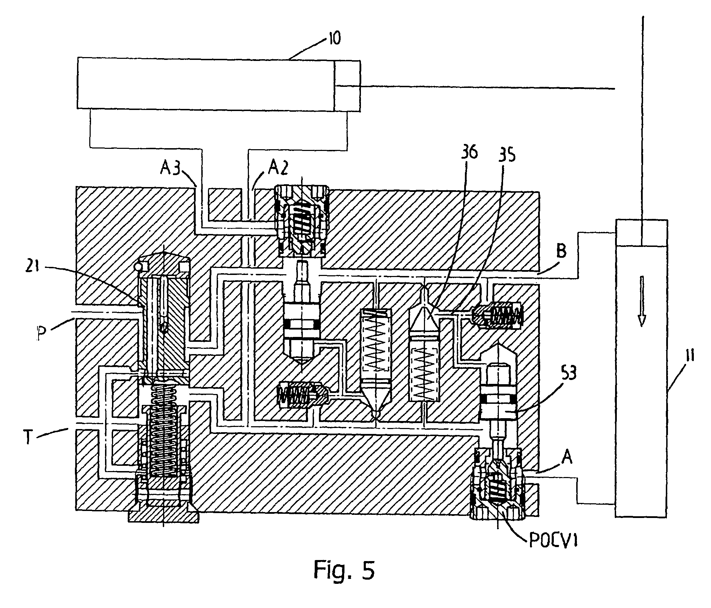

Then, a pressure rise will occur as a result of the width adjustment cylinder 10 which has been moving in the direction of the narrow position of the plough coming to a standstill, in particular reaching the limit position. This pressure exceeds the usual operating pressure of the hydraulic system. The increased pressure applies a load to the opening control surface of the sequence valve 36 and causes the valve 36 to open the control pressure passage 35. This leads to the nonreturn valve POCV1 being opened by means of the associated control piston 53 (cf. Figure 5).

Then, in the situation shown in Figure 5, the turning cylinder 11 is activated by the supply of hydraulic fluid via the second connection B and the discharge of hydraulic fluid via the first connection A. In the process, the slide valve 21 remains in its first position,

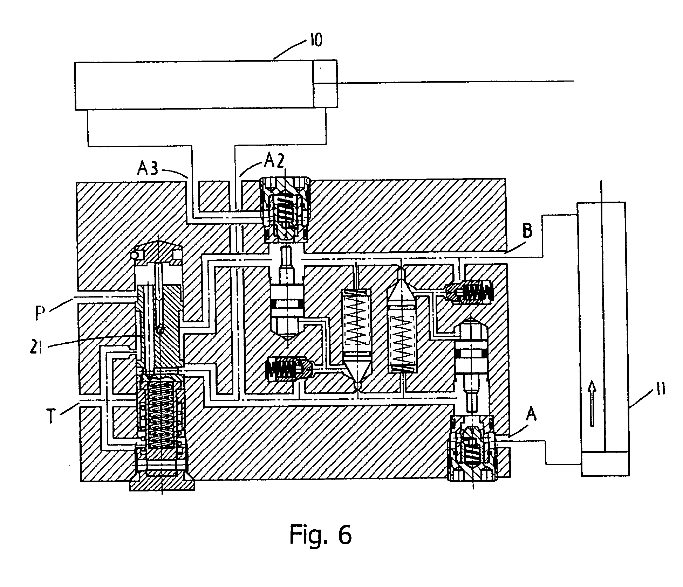

A pressure rise again occurs as a result of the turning cylinder 11 then coming to a standstill, in particular reaching a limit position. This pressure too will exceed the operating pressure of the hydraulic system. As a result, the slide valve 21 moves into the second position, as can be seen from Figure 6.

Once the slide valve 21 has adopted its second position, the turning cylinder 11 is activated again by the supply of hydraulic fluid via the first connection A and the discharge of hydraulic fluid via the second connection B. The piston rod of the turning cylinder 11 is then extended, as shown by the arrow in Figure 6.

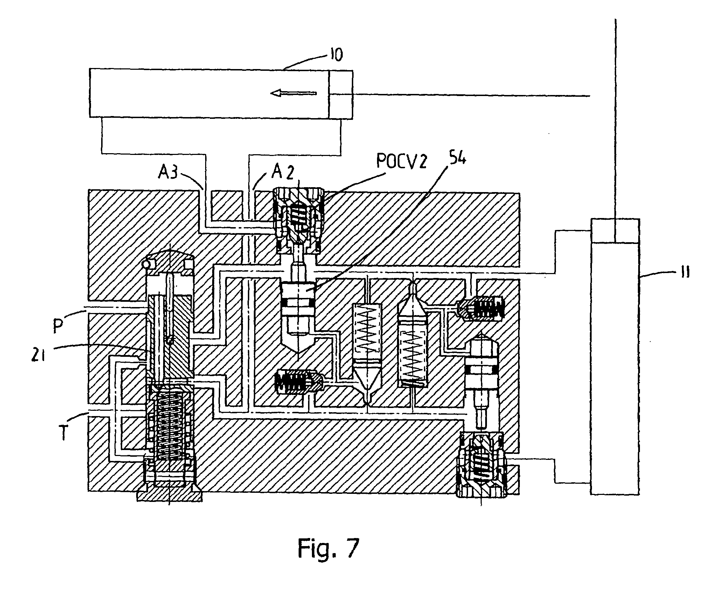

Then, a pressure rise which exceeds the operating pressure will occur again as a result of the turning cylinder 11 coming to a standstill, in particular reaching a limit position. This pressure applies a load to the opening control surface of the sequence valve 41, which as a result opens the control pressure passage 40. As a result, the control piston 54 is activated and the nonreturn valve POCV2 is opened (cf. Figure 7). As a result, the width adjustment cylinder 10 will then be activated by the supply of hydraulic fluid via the connection A2 and the discharge of hydraulic fluid via the connection A3 (cf. arrow in Figure 7), with the result that the plough moves in the direction of the wide position.

The return pressure generator 8 and throttle 31 are provided in order to generate a return pressure which helps the sequence valves 36, 41 to operate reliably. This is because this return pressure acts on the closing surface of the corresponding sequence valve and contributes to the closing force, which is otherwise substantially provided by the spring of the sequence valve.

The operating pressure of the system is, by way of example, 200 bar. The force of the spring may then, for example, be such that the opening pressure required is 150 bar. If the ratio between the opening surface area and the closing surface area of the sliding body of the sequence valve is, for example, 1:16 and a return pressure of 5 bar is generated, the opening pressure required is 150 (spring force) + 80 (5 bar x 16) = 230 bar. As a result, the sequence valve cannot open under the influence of the operating pressure. When the return pressure drops once a cylinder has reached its limit position, the corresponding sequence valve will open at a pressure of 150 bar.

The return pressure also acts on the sliding body of the slide valve 21 in the same direction as the spring 22 and thereby contributes to reliable switching of the said slide valve 21.

Briefly actuating the valve 14 in Figure 2 in such a way that the pressure connection P is connected to the reservoir 12 enables the spring 22 to restore the starting position for a subsequent turning cycle. This starting position and the cycle are therefore independent of which side of the tractor the plough is located on at the start of the cycle.

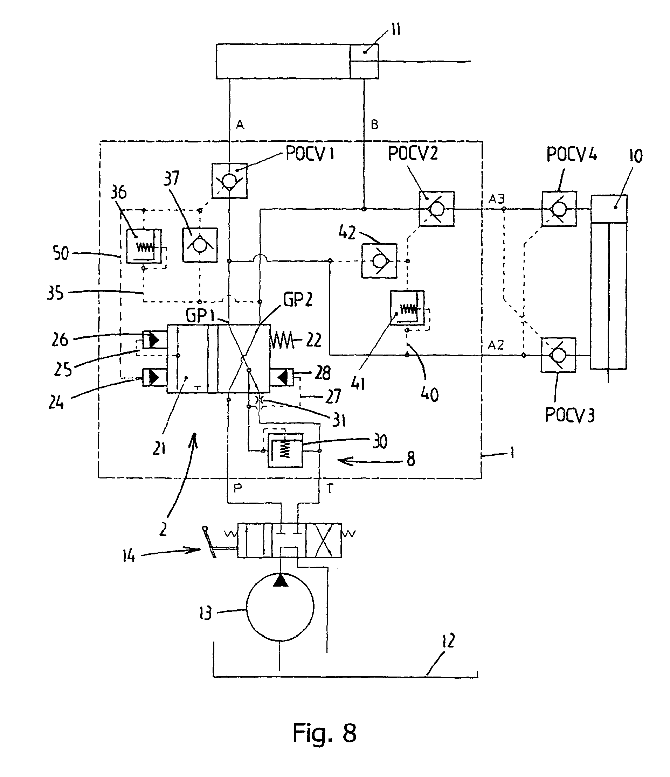

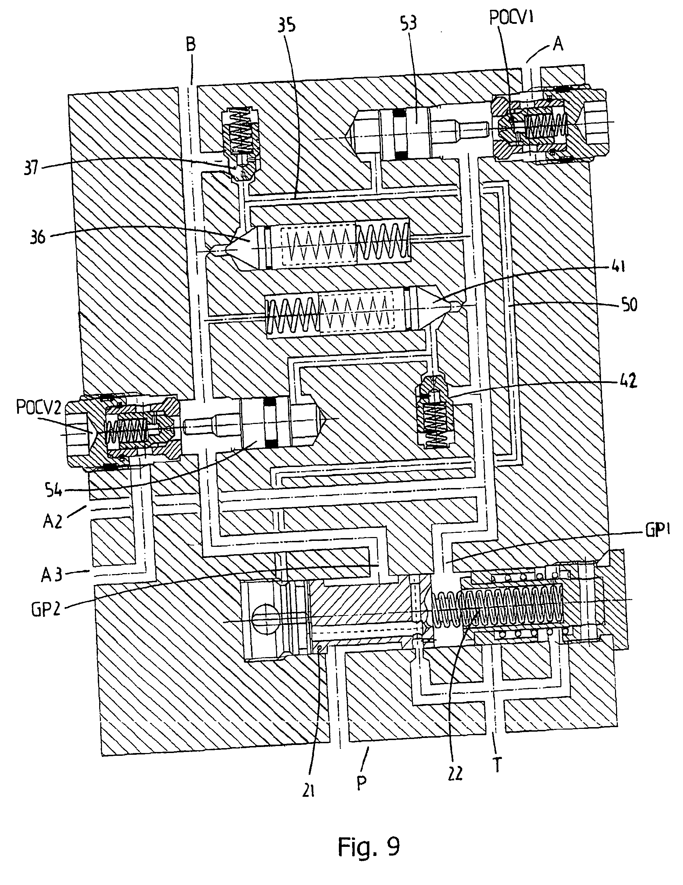

Figures 8 and 9 show another preferred embodiment of a valve assembly according to the invention. In these figures, components which correspond to components of the valve assembly shown in Figures 2 - 7 are provided with the same reference numerals.

The difference between the valve assembly shown in Figures 8 and 9 and the valve assembly described above relates to the design of the control pressure means associated with the slide valve 21. The control pressure feature 23 shown in Figure 2, which is in direct communication with the pressure connection P, is absent in the circuit diagram shown in Figure 8 and has been replaced by control pressure passage 50.

The control pressure passage 50 is in communication with the second controlled port GP2 via the sequence valve 36. As has been mentioned above, the sequence valve 36 opens if the pressure on the side of the second controlled port GP2 exceeds a defined pressure value. As a result, first of all the nonreturn valve POCV1 will open, followed, under the influence of the control pressure via the control pressure feature 50, by the slide valve 21.

It will be clear from the description given above that the inventive idea can also be realized in other design forms as well as the embodiment described here.

## Claims

1. Valve assembly (1) for a hydraulic actuating device for a reversible plough, which actuating device comprises a width adjustment cylinder (10) for moving the plough in the width direction between a narrow position and a wide position, and a turning cylinder (11) for turning the plough about a turning axis,
which valve assembly (1) is designed to turn the plough on command by firstly moving the plough into a narrow position, then turning the plough and then moving it back into a wide position,
which valve assembly (1) comprises:
- a pressure connection (P) and a return connection (T), which can respectively be connected to means for supplying pressurized hydraulic fluid and to a reservoir,
- a first and second connection (A, B), which can be connected to the turning cylinder,
- a third connection (A2) which can be connected to the width adjustment cylinder (10), in such a manner that, when hydraulic fluid is supplied to the width adjustment cylinder (10) via the third connection (A2), the plough moves towards its wide position,
- a fourth connection (A3), which can be connected to the width adjustment cylinder (10), in such a manner that, when hydraulic fluid is supplied to the width adjustment cylinder (10) via the fourth connection (A3), the plough moves in the direction of its narrow position, which valve assembly also comprises:
- a pressure-actuated control valve circuit (2) having a first controlled port (GP1) and a second controlled port (GP2), in such a manner that the first and second controlled ports (GP1, GP2), in a first mode, are respectively connected to the return connection (T) and the pressure connection (P) and, in a second mode, are respectively connected to the pressure connection (P) and the return connection (T),
- which control valve circuit (2) has associated control pressure means, in such a manner that, at a defined control pressure, the control valve circuit (2) moves from a first position to the second position, wherein
- the first controlled port (GP1) is in communication with the first connection (A) and with the third connection (A2), and
- the second controlled port (GP2) is in communication with the second connection (B) and with the fourth connection (A3),
**characterized in that**
a pressure-actuated nonreturn valve (POCV3) and (POCV4) is incorporated in each connecting section between one of the connections (A2) and (A3) and the associated connection of the width adjustment cylinder (10) and has a control pressure line which is connected to the other connecting section to the width adjustment cylinder (10).
a first pressure-actuated sequence circuit (4;POCV1,36) comprising a first valve (POCV1) having a nonreturn valve function in the direction of the first controlled port (GP1) is present in the connecting section between the first connection (A) and the first controlled port (GP1), which nonreturn valve function can be eliminated under the influence of a control pressure in an associated first control pressure passage (5;35) which is in communication with the second controlled port (GP2), and
a second pressure-actuated sequence circuit (6;POCV2,41) comprising a second valve (POCV 2) having a nonreturn valve function in the direction of the second controlled port (GP2) being present in the connecting section between the fourth connection (A3) and the second controlled port (GP2), which nonreturn valve function can be eliminated under the influence of a control pressure in an associated second control pressure passage (7;40) which is in communication with the first controlled port (GP1),
in such a manner that when hydraulic fluid is supplied to the pressure connection (P), with the control valve circuit (2) in the first mode, in succession:
- the width adjustment cylinder (10) moves in the direction of the narrow position,
- the nonreturn valve function (4;POCV1) of the first sequence circuit is eliminated under the influence of a hydraulic pressure in the associated first control pressure passage (5;35) which is formed as a result of a pressure rise caused by the width adjustment cylinder (10) which has been moving in the direction of the narrow position of the plough coming to a standstill, in particular as a result of the limit position being reached, so that the turning cylinder (11) is activated by the supply of hydraulic fluid to the second connection (B) and the discharge of hydraulic fluid via the first connection (A),
- the control valve circuit (2) goes from the first mode into the second mode under the influence of a control pressure in the associated control pressure means (3;23;50) which is formed as a result of a pressure rise caused by the turning cylinder (11) coming to a standstill, in particular reaching a limit position, so that the turning cylinder (11) is again activated, in the opposite direction, as a result of hydraulic fluid being supplied via the first connection (A) and hydraulic fluid being discharged via the second connection (B),
- the nonreturn valve function (6;POCV2) of the second sequence circuit is eliminated under the influence of a hydraulic pressure in the associated second control pressure passage (7;40) which is formed as a result of a pressure rise caused by the turning cylinder (11) coming to a standstill, in particular reaching a limit position, so that the width adjustment cylinder (10) is activated by the supply of hydraulic fluid via the third connection (A2) and discharge of hydraulic fluid via the fourth connection (A3), with the result that the plough moves in the direction of the wide position.

2. Valve assembly according to claim 1, in which the control means associated with the control valve circuit (2) comprise a control pressure passage (23) which is in direct communication with the pressure connection (P), in such a manner that, at a defined control pressure, the control valve circuit moves from the first mode into the second mode.

3. Valve assembly according to claim 1, in which the control pressure means associated with the control valve circuit (2) comprise a control pressure passage (50) which is in communication with the second controlled port (GP2) by way of a valve (36) which opens at a defined pressure at the second control port (GP2).

4. Valve assembly according to one or more of the preceding claims, in which the control valve circuit (2) comprises a pressure-actuated 4/2 slide valve (21) with spring return (22).

5. Valve assembly according to claim 4, in which the slide valve (21) has a first control pressure passage (23), which is in communication with the pressure connection (P), in such a manner that a control pressure acts on the sliding body, pressing the sliding body in the direction of the second position, so that at a defined control pressure in the said control passage (23) the slide valve (21) moves from the first position into the second position.

6. Valve assembly according to claim 4 or 5, in which the slide valve (21) has a second control pressure passage (25), which, in the second position of the slide valve (21), is in communication with the pressure connection (P), so that the sliding body is then pressed in the direction of the second position.

7. Valve assembly according to claim 4 or 5, in which the slide valve (21) has a third control pressure passage (27), which presses the sliding body in the direction of the first position.

8. Valve assembly according to claim 7, in which the third control pressure passage is in communication with a return passage (29) between the slide valve (21) and the return connection (T), in which a return pressure is generated by a return pressure generator (8).

9. Valve assembly according to claim 8, in which the return pressure generator (8) comprises a pressure-regulating device (30), which is arranged in the associated liquid path between the slide valve (21) and the return connection (T).

10. Valve assembly according to claim 9, in which a throttle member (31) is incorporated in the same path, in parallel with the pressure-regulating device (30).

11. Valve assembly according to one or more of the preceding claims, in which the first sequence circuit (4) comprises a pressure-actuated nonreturn valve (POCV1) which closes in the direction of the first controlled port (GP1), it being possible for the closing action of the said nonreturn valve (POCV1) to be eliminated under the influence of a control pressure in an associated first control pressure passage (35) which is in communication with the second controlled port (GP2).

12. Valve assembly according to claim 11, in which a sequence valve (36) is incorporated in the first control pressure passage (35) and opens if the pressure on the side of the second controlled port (GP2) exceeds a defined pressure value, so that the nonreturn valve (POCV1) then opens.

13. Valve assembly according to claim 12, in which there is a nonreturn valve (37) arranged in parallel with the sequence valve (36) in order to allow liquid to flow back out of the control pressure passage (35) between the valve (36) and the control piston (53) of nonreturn valve POCV1 if the second controlled port (GP2) is connected to the reservoir (12).

14. Valve assembly according to one or more of the preceding claims, in which the second pressure-actuated sequence circuit (6) comprises a pressure-actuated nonreturn valve (POCV2) which closes in the direction of the first controlled port GP2, and in which the closing action of the said nonreturn valve (POCV2) can be eliminated under the influence of a control pressure in an associated second control pressure passage (40) which is in communication with the first controlled port (GP1).

15. Valve assembly according to claim 13, in which a sequence valve (41) is incorporated in the second control pressure passage (40) and opens if the pressure on the side of the first controlled port (GP1) exceeds a defined pressure value, so that the nonreturn valve (POCV2) then opens.

16. Valve assembly according to claim 15, in which there is a nonreturn valve (42) arranged in parallel with the sequence valve (41) in order to allow liquid to flow back out of the control pressure passage (40) between the valve (41) and the control system (54) of nonreturn valve (POCV2) if the controlled port (GP1) is connected to the reservoir (12).

17. Valve assembly according to claim 12, 13, 15 or 16, in which a sequence valve (36, 41) has a sliding body (49, 48) with a conical point on the front side, which is able to close off a through-opening of the associated control pressure passage (35, 40), that part of the conical point which projects into the through-opening in each case forming an opening pressure surface of the sliding body (49, 48).

18. Valve assembly according to claim 17, in which on the rear side a spring (51, 52) presses against the sliding body (49, 48) of the sequence valve, and in which the rear side of each sliding body (49, 48) also forms a closing pressure surface, the closing pressure surface of sliding body (49) of the first sequence valve (36) being in communication with the first controlled port (GP1) and the closing pressure surface of the sliding body of the second sequence valve (41) being in communication with the second controlled port (GP2).

19. Valve assembly according to any of the claims 12, 13, 15, 18, in which the nonreturn valve (POCV1, POCV2) comprises a control piston (53, 54) which is subjected to load on one side by the hydraulic pressure in the associated control pressure passage (35, 40) if a sequence valve (36, 41) incorporated therein is opened.

20. Valve assembly according to claim 19, in which the nonreturn valve (POCV1, POCV2) comprises a valve body (55, 56) which is pressed towards its seat by a spring and is pressed off its seat by means of an associated control piston (53, 54) in order thereby to eliminate the nonreturn valve action.

21. Hydraulic actuating device for a reversible plough, comprising a valve assembly according to one or more of the preceding claims.

## Patentansprüche

1. Ventilanordnung (1) für eine hydraulische Betätigungsvorrichtung für einen wendbaren Pflug, wobei die Antriebsvorrichtung einen Breiteneinstellungszylinder (10) zum Bewegen des Pflugs in der Breitenrichtung zwischen einer schmalen Position und einer breiten Position, und einen Drehzylinder (11) für das Drehen des Pflugs um eine Drehachse aufweist, wobei die Ventilanordnung (1) ausgelegt ist, den Pflug auf Anforderung zu drehen, indem der Pflug zuerst in eine schmale Position bewegt wird, der Pflug dann gedreht wird und er dann zurück in eine breite Position bewegt wird, wobei die Ventilanordnung (1) umfasst:
- einen Druckanschluss (P) und einen Rückflussanschluss (T), die jeweils mit einer Vorrichtung für die Versorgung mit hydraulischer Druckflüssigkeit und einem Reservoir verbunden werden können,
- einen ersten und einen zweiten Anschluss (A, B), die mit dem Drehzylinder verbunden werden können,
- einen dritten Anschluss (A2), der derart mit dem Breiteneinstellungszylinder (10) verbunden werden kann, dass der Pflug sich in Richtung seiner breiten Position bewegt, wenn dem Breiteneinstellungszylinder (10) durch den dritten Anschluss (A2) hydraulische Flüssigkeit zugeführt wird,
- einen vierten Anschluss (A3), der derart mit dem Breiteneinstellungszylinder (10) verbunden werden kann, dass der Pflug sich in die Richtung seiner schmalen Position bewegt, wenn dem Breiteneinstellungszylinder (10) durch den vierten Anschluss (A3) hydraulische Flüssigkeit zugeführt wird,
wobei die Ventilanordnung außerdem umfasst:
- einen druckgesteuerten Steuerventilkreis (2), der einen ersten gesteuerten Anschluss (GP1) und einen zweiten gesteuerten Anschluss (GP2) aufweist, wobei der erste und der zweite gesteuerte Anschluss (GP1, GP2) in einem ersten Modus jeweils mit dem Rückflussanschluss (T) und dem Druckanschluss (P) und in einem zweiten Modus jeweils mit dem Druckanschluss (P) und dem Rückflussanschluss (T) verbunden sind,
- wobei der Steuerventilkreis (2) zugeordnete Steuerdruckvorrichtungen in der Art aufweist, dass sich der Steuerventilkreis (2) bei einem definierten Steuerdruck aus einer ersten Position in eine zweite Position bewegt, wobei
- der erste gesteuerte Anschluss (GP1) mit dem ersten Anschluss (A) und dem dritten Anschluss (A2) kommuniziert, und
- der zweite gesteuerte Anschluss (GP2) mit dem zweiten Anschluss (B) und dem vierten Anschluss (A3) kommuniziert,
**dadurch gekennzeichnet, dass**
ein druckgesteuertes Rückschlagventil (POCV3) und (POCV4) in jeden Verbindungsbereich zwischen einem der Anschlüsse (A2) und (A3) und dem zugehörigen Anschluss des Breiteneinstellungszylinders (10) eingebaut ist und eine Steuerdruckeitung aufweist, die mit dem anderen Verbindungsbereich zu dem Breiteneinstellungszylinder (10) verbunden ist,
ein erster druckgesteuerter Folgekreis (4; POCV1, 36), der ein erstes Ventil (POCV1) aufweist, das eine Rückschlagventilfunktion in der Richtung des ersten gesteuerten Anschlusses (GP1) hat und in dem Verbindungsbereich zwischen dem ersten Anschluss (A) und dem ersten gesteuerten Anschluss (GP1) angeordnet ist, wobei die Rückschlagventilfunktion unter dem Einfluss eines Steuerdrucks in einem dazugehörigen ersten Steuerdruckkanal (5; 35), der mit dem zweiten gesteuerten Anschluss (GP2) kommuniziert, ausgeschaltet werden kann, und
ein zweiter druckgesteuerter Folgekreis (6; POCV2, 41), der ein zweites Ventil (POCV2) aufweist, das eine Rückschlagventilfunktion in der Richtung des zweiten gesteuerten Anschlusses (GP2) hat und in dem Verbindungsbereich zwischen dem vierten Anschluss (A3) und dem zweiten gesteuerten Anschluss (GP2) angeordnet ist, wobei die Rückschlagventilfunktion unter dem Einfluss eines Steuerdrucks in einem zugehörigen zweiten Steuerdruckkanal (7; 40), der mit dem ersten gesteuerten Anschluss (GP1) kommuniziert, ausgeschaltet werden kann,
in einer solchen Weise, dass wenn hydraulische Flüssigkeit dem Druckanschluss (P) zugeführt wird, während sich der Steuerdruckventilkreis in dem ersten Modus befindet, in der Folge:
- der Breiteneinstellungszylinder (10) sich in die Richtung der schmalen Position bewegt,
- die Rückschlagventilfunktion (4, POCV1) des ersten Folgekreises aufgehoben wird unter dem Einfluss eines hydraulischen Druckes in dem dazugehörigen ersten Steuerdruckkanal (5, 35), der als Ergebnis eines Druckanstieges entsteht, der **dadurch** verursacht wird, dass der Breiteneinstellungszylinder (10), welcher sich in die Richtung der schmalen Position des Pfluges bewegt hat zu einem Stillstand kommt und insbesondere **dadurch** dass die Endposition erreicht worden ist, so dass der Drehzylinder (11) durch die Zufuhr von Hydraulikflüssigkeit zu dem zweiten Anschluss (B) und der Abgabe von Hydraulikflüssigkeit durch den ersten Anschluss (A) aktiviert wird,
- der Steuerventilkreis (2) unter dem Einfluss eines Steuerdrucks in der zugehörigen Steuerdruckvorrichtung (3, 23, 50), der als Ergebnis eines Druckanstieges, der **dadurch**, dass der Drehzylinder (11), zu einem Stillstand kommt und insbesondere eine Endposition erreicht, von einem ersten Modus in einen zweiten Modus über geht, so dass der Drehzylinder (11) als ein Ergebnis der Zufuhr von Hydraulikflüssigkeit durch den ersten Anschluss (A) und der Abgabe von Hydraulikflüssigkeit durch den zweiten Anschluss (B), wieder in die entgegengesetzte Richtung aktiviert wird,
- die Rückschlagventilfunktion (6; POCV2) des zweiten Folgekreises aufgehoben wird unter dem Einfluss eines hydraulischen Druckes in dem dazugehörigen zweiten Steuerdruckkanal (7; 40), der als ein Ergebnis eines Druckanstieges entsteht, welches **dadurch** verursacht wird, dass der Drehzylinder (11), zu einem Stillstand kommt und insbesondere durch das Erreichen einer Endposition, so dass der Breiteneinstellungszylinder (10) durch die Zufuhr von Hydraulikflüssigkeit durch den dritten Anschluss (A2) und die Abgabe von Hydraulikflüssigkeit durch den vierten Anschluss (A3) mit dem Ergebnis aktiviert wird, dass der Pflug sich in die Richtung der breiten Position bewegt.

2. Ventilanordnung nach Anspruch 1, in der die zu dem Steuerventilkreis (2) zugehörige Steuervorrichtung einen Steuerdruckkanal (23) aufweist, der in der Art mit dem Druckanschluss (P) kommuniziert, dass bei einem definierten Steuerdruck der Steuerventilkreis von einem ersten Modus in einen zweiten Modus übergeht.

3. Ventilanordnung nach Anspruch 1, in der die zu dem Steuerventilkreis (2) zugehörige Drucksteuervorrichtung einen Steuerdruckkanal (50) aufweist, der mit dem zweiten gesteuerten Anschluss (GP2) über ein Ventil (36) kommuniziert, das sich bei einem definierten Druck in dem zweiten gesteuerten Anschluss (GP2) öffnet.

4. Ventilanordnung nach einem oder mehreren der vorhergehenden Ansprüche, in denen der Steuerventilkreis (2) ein druckgesteuertes 4/2-Schieber mit einer Federrückstellung (22) aufweist.

5. Ventilanordnung nach Anspruch 4, bei der der Schieber (21) einen ersten Steuerdruckkanal (23) aufweist, der derart mit dem Druckanschluss (P) kommuniziert, dass ein Steuerdruck auf den Schieberkörper wirkt, den Schieberkörper in die Richtung der zweiten Position drückt, so dass bei einem definierten Steuerdruck in dem Steuerkanal (23) sich der Schieber (21) von einer ersten Position in eine zweite Position bewegt.

6. Ventilanordnung nach Anspruch 4 oder 5, bei der der Schieber (21) einen zweiten Steuerdruckkanal (25) aufweist, der in der zweiten Position des Schiebers (21) mit dem Druckanschluss (P) kommuniziert, so dass der Schieberkörper dann in die Richtung der zweiten Position gedrückt wird.

7. Ventilanordnung nach Anspruch 4 oder 5, bei der der Schieber (21) einen dritten Steuerdruckkanal (27) aufweist, der den Schieberkörper in die Richtung der ersten Position drückt.

8. Ventilanordnung nach Anspruch 7, bei der der dritte Steuerdruckkanal mit einem Rückflussdurchgang (29) zwischen dem Schieber (21) und dem Rückflussanschluss (T) kommuniziert, in dem ein Rückflussdruck durch einen Rückflussdruckgenerator (8) erzeugt wird.

9. Ventilanordnung nach Anspruch 8, bei der der Rückflussdruckgenerator (8) eine Druckregulierungseinrichtung (30) aufweist, die in dem zugehörigen Flüssigkeitspfad zwischen dem Schieber (21) und dem Rückflussanschluss (T) angeordnet ist.

10. Ventilanordnung nach Anspruch 9, bei der ein Drosselelement (31) in dem selben Pfad parallel zu der Druckregulierungseinrichtung (30) eingebaut ist.

11. Ventilanordnung nach einem oder mehreren der vorhergehenden Ansprüche, bei der der erste Folgekreis (4) ein druckgesteuertes Rückschlagventil (POCV1) aufweist, das sich in Richtung auf den ersten gesteuerten Anschluss (GP1) schließt, wobei es möglich ist, das Schließen des Rückschlagventils (POCV1) unter dem Einfluss eines Steuerdruckes in einem zugehörigen ersten Steuerdruckdurchgang (35), der mit dem zweiten gesteuerten Anschluss (GP2) kommuniziert, aufzuheben.

12. Ventilanordnung nach Anspruch 11, bei der ein Arbeitsfolgeventil (36) in den ersten Steuerdruckkanal (35) eingebaut ist und sich öffnet, wenn der Druck auf einer Seite des zweiten gesteuerten Anschlusses (GP2) einen definierten Druckwert überschreitet, so dass sich das Rückschlagventil (POCV1) dann öffnet.

13. Ventilanordnung nach Anspruch 12, bei der ein Rückschlagventil (37) parallel zu dem Arbeitsfolgeventil (36) angeordnet ist, um es Flüssigkeit zu erlauben, aus dem Steuerdruckkanal (35) zwischen dem Ventil (36) und dem Steuerkolben (53) des Rückschlagventils (POCV1) zurück zu fließen, wenn der zweite gesteuerte Anschluss (GP2) mit dem Reservoir (12) verbunden ist.

14. Ventilanordnung nach einem oder mehreren der vorhergehenden Ansprüche, bei der der zweite druckgesteuerte Folgekreis (6) ein druckgesteuertes Rückschlagventil (POCV2) aufweist, das sich in Richtung des ersten gesteuerten Anschlusses (GP2) schließt, und bei dem das Schließen des Rückschlagventils (POCV2) unter dem Einfluss eines Steuerdruckes in einen zugehörigen zweiten Steuerdruckkanal (40), der mit dem ersten gesteuerten Anschluss (GP1) kommuniziert, aufgehoben werden kann.

15. Ventilanordnung nach Anspruch 13, bei der ein Arbeitsfolgeventil (41) in den zweiten Steuerdruckdurchgang (40) eingebaut ist und es sich öffnet, wenn der Druck auf der Seite des ersten gesteuerten Anschlusses (GP1) einen definierten Druckwert überschreitet, so dass sich dann das Rückschlagventil (POCV2) öffnet.

16. Ventilanordnung nach Anspruch 15, bei der ein Rückschlagventil (42) parallel zu dem Arbeitsfolgeventil (41) angeordnet ist, um es Flüssigkeit zu erlauben, aus dem Steuerdruckdurchgang (40) zwischen dem Ventil (41) und dem Steuersystem (54) des Rückschlagventils (POCV2) zurück zu fließen, wenn der gesteuerte Anschluss (GP1) mit dem Reservoir (12) verbunden ist.

17. Ventilanordnung nach Anspruch 12, 13, 15 oder 16, bei der ein Arbeitsfolgeventil (36, 41) einen Schieberkörper (49, 48) mit einem konischen Punkt an der Stirnseite aufweist, der in der Lage ist, eine Kanalöffnung des zugehörigen Steuerdruckkanals (35, 40) abzuschließen, wobei der Teil des konischen Punktes, der in die Durchgangsöffnung hineinragt in jedem Fall eine öffnende Druckfläche des Schieberkörpers (49, 48) bildet.

18. Ventilanordnung nach Anspruch 17, bei der an der Rückseite eine Feder (51, 52) gegen den Schieberkörper (49, 48) des Arbeitsfolgeventils drückt, und bei der die Rückseite jedes Schieberkörpers (49, 48) ebenfalls eine schließende Druckfläche bildet, wobei die schließende Druckfläche des Schieberkörpers (49) des ersten Arbeitsfolgeventils (36) mit dem ersten gesteuerten Anschluss (GP1) kommuniziert und die schließende Druckfläche des Schieberkörpers des zweiten Arbeitsfolgeventils (41) mit dem zweiten gesteuerten Anschluss (GP2) kommuniziert.

19. Ventilanordnung nach einem der Ansprüche 12, 13, 15 bis 18, bei der die Rückschlagventile (POCV1, POCV2) einen Steuerkolben (53, 54) aufweisen, der auf einer Seite einer Last durch den hydraulischen Druck in dem zugehörigen Steuerdruckkanal (35, 40) ausgesetzt ist, wenn ein hierin eingebautes Arbeitsfolgeventil (36, 41) geöffnet ist.

20. Ventilanordnung nach Anspruch 19, bei der das Rückschlagventil (POCV1, POCV2) einen Ventilkörper (55, 56) aufweist, der von einer Feder in Richtung seines Sitzes gedrückt wird und von seinem Sitz durch einen zugehörigen Steuerkolben (53, 54) gedrückt wird, um so die Rückschlagwirkung auszuschalten.

21. Hydraulische Betätigungsvorrichtung für einen wendbaren Pflug, mit einer Ventilanordnung nach einem oder mehreren der vorhergehenden Ansprüche.

## Revendications

1. Ensemble (1) de vannes pour un dispositif d'actionnement hydraulique d'une charrue réversible, lequel dispositif d'actionnement comprend un cylindre (10) de réglage de largeur destiné à déplacer la charrue dans le sens de la largeur entre une position étroite et une position large, et un cylindre (11) de pivotement servant à faire pivoter la charrue autour d'un axe de pivotement, ledit ensemble (1) de vannes étant conçu pour faire pivoter la charrue sur ordre en déplaçant d'abord la charrue dans une position étroite, en faisant pivoter ensuite la charrue et en la ramenant ensuite dans une position large, lequel ensemble (1) de vannes comprend :
un raccord (P) de pression et un raccord (T) de retour, pouvant respectivement être reliés à un moyen de délivrance d'un fluide hydraulique sous pression et à un réservoir,
des premier et deuxième raccords (A, B) qui peuvent être reliés au cylindre de pivotement,
un troisième raccord (A2) qui peut être relié au cylindre (10) de réglage de largeur de sorte que, lorsqu'un fluide hydraulique est délivré au cylindre (10) de réglage de largeur via le troisième raccord (A2), la charrue bouge vers sa position large,
un quatrième raccord (A3) qui peut être relié au cylindre (10) de réglage de largeur de sorte que, lorsqu'un fluide hydraulique est délivré au cylindre (10) de réglage de largeur via le quatrième raccord (A3), la charrue bouge dans la direction de sa position étroite, lequel ensemble de vannes comprend également :
un circuit (2) de vannes de commande actionné par pression comportant un premier orifice commandé (GP1) et un second orifice commandé (GP2) de sorte que les premier et second orifices commandés (GP1, GP2), dans un premier mode, sont reliés respectivement au raccord (T) de retour et au raccord (P) de pression et que, dans un second mode, ils sont reliés respectivement au raccord (P) de pression et au raccord (T) de retour,
ledit circuit (2) de vannes de commande comportant des moyens de commande de pression associés de sorte que, à une pression de commande définie, le circuit (2) de vannes de commande passe d'une première position à une seconde position, où
le premier orifice commandé (GP1) est en communication avec le premier raccord (A) et avec le troisième raccord (A2), et
le second orifice commandé (GP2) est en communication avec le deuxième raccord (B) et avec le quatrième raccord (A3),
**caractérisé en ce que**
une vanne antiretour actionnée par pression (POCV3) et (POCV4) est incorporée dans chaque section de liaison entre l'un des raccords (A2) et (A3) et le raccord associé du cylindre (10) de réglage de largeur, et comporte une ligne de pression de commande qui met en communication l'autre section de liaison avec le cylindre (10) de réglage de largeur,
un premier circuit (4 ; POCV1, 36) de séquence actionné par pression comprenant une première vanne (POCV1), assurant une fonction de vanne antiretour dans le sens du premier orifice commandé (GP1), est présent dans la section de liaison entre le premier raccord (A) et le premier orifice commandé (GP1), laquelle fonction de vanne antiretour peut être éliminée sous l'influence d'une pression de commande dans un premier passage (5 ; 35) de pression de commande associé qui est en communication avec le second orifice commandé (GP2), et
un second circuit (6 ; POCV2, 41) de séquence actionné par pression comprenant une seconde vanne (POCV2), assurant une fonction de vanne antiretour dans le sens du second orifice commandé (GP2), étant présent dans la section de liaison entre le quatrième raccord (A3) et le second orifice commandé (GP2), laquelle fonction de vanne antiretour peut être éliminée sous l'influence d'une pression de commande dans un second passage (7 ; 40) de commande de pression associé qui est en communication avec le premier orifice commandé (GP1),
de sorte que, lorsqu'un fluide hydraulique est délivré au raccord (P) de pression, le circuit (2) de vannes de commande étant dans le premier mode, successivement :
le cylindre (10) de réglage de largeur va dans le sens de la position étroite,
la fonction (4 ; POCV1) de vanne antiretour du premier circuit de séquence est éliminée sous l'influence d'une pression hydraulique dans le premier passage (5 ; 35) de pression de commande associé qui est formée à la suite d'une élévation de pression provoquée par le fait que le cylindre (10) de réglage de largeur qui est allé dans le sens de la position étroite de la charrue s'arrête, en particulier du fait de l'atteinte de la position limite, de sorte que le cylindre (11) de pivotement est activé par la délivrance d'un fluide hydraulique au deuxième raccord (B) et par la décharge d'un fluide hydraulique via le premier raccord (A),
le circuit (2) de vannes de commande passe du premier mode au second mode sous l'influence d'une pression de commande dans le moyen (3 ; 23 ; 50) de pression de commande associé qui est formée à la suite d'une élévation de pression provoquée par le fait que le cylindre (11) de pivotement s'arrête, en particulier en atteignant une position limite, de sorte que le cylindre (11) de pivotement est activé de nouveau, dans le sens contraire, comme résultat d'une délivrance d'un fluide hydraulique via le premier raccord (A) et d'une décharge d'un fluide hydraulique via le deuxième raccord (B),
la fonction (6 ; POCV2) de vanne antiretour du second circuit de séquence est éliminée sous l'influence d'une pression hydraulique dans le second passage (7 ; 40) de pression de commande associé qui est formée à la suite d'une élévation de pression provoquée par le fait que le cylindre (11) de pivotement s'arrête, en particulier en atteignant une position limite, de sorte que le cylindre (10) de réglage de largeur est activé par la délivrance d'un fluide hydraulique via le troisième raccord (A2) et la décharge d'un fluide hydraulique via le quatrième raccord (A3), le résultat étant que la charrue bouge dans la direction de la position large.

2. Ensemble de vannes selon la revendication 1, dans lequel le moyen de commande associé au circuit (2) de vannes de commande comprend un passage (23) de pression de commande qui est en communication directe avec le raccord (P) de pression de sorte que, à une pression de commande définie, le circuit de vannes de commande passe du premier mode au second mode.

3. Ensemble de vannes selon la revendication 1, dans lequel le moyen de pression de commande associé au circuit (2) de vannes de commande comprend un passage (50) de pression de commande qui est en communication avec le second orifice commandé (GP2) au moyen d'une vanne (36) qui s'ouvre à une pression définie au niveau du second orifice (GP2) de commande.

4. Ensemble de vannes selon une ou plusieurs des revendications précédentes, dans lequel le circuit (2) de vannes de commande comprend une vanne à tiroir 4/2 actionnée par pression (21) à rappel par ressort (22).

5. Ensemble de vannes selon la revendication 4, dans lequel la vanne à tiroir (21) comporte un premier passage (23) de pression de commande, qui est en communication avec le raccord (P) de pression de sorte qu'une pression de commande agit sur le corps coulissant, en poussant le corps coulissant dans le sens de la seconde position, de sorte que, à une pression de commande définie dans ledit passage (23) de commande, la vanne à tiroir (21) passe de la première position à la seconde position.

6. Ensemble de vannes selon la revendication 4 ou 5, dans lequel la vanne à tiroir (21) comporte un deuxième passage (25) de pression de commande qui, dans la seconde position de la vanne à tiroir (21), est en communication avec le raccord (P) de pression de sorte que le corps coulissant est alors poussé dans le sens de la seconde position.

7. Ensemble de vannes selon la revendication 4 ou 5, dans lequel la vanne à tiroir (21) comporte un troisième passage (27) de pression de commande qui pousse le corps coulissant dans le sens de la première position.

8. Ensemble de vannes selon la revendication 7, dans lequel le troisième passage de pression de commande est en communication avec un passage (29) de renvoi entre la vanne à tiroir (21) et le raccord (T) de retour, dans lequel une pression de renvoi est générée par un générateur (8) de pression de renvoi.

9. Ensemble de vannes selon la revendication 8, dans lequel le générateur (8) de pression de renvoi comprend un dispositif (30) de régulation de pression, qui est agencé dans le trajet de liquide associé entre la vanne à tiroir (21) et le raccord (T) de retour.

10. Ensemble de vannes selon la revendication 9, dans lequel un élément formant papillon (31) est incorporé dans le même trajet, en parallèle avec le dispositif (30) de régulation de pression.

11. Ensemble de vannes selon une ou plusieurs des revendications précédentes, dans lequel le premier circuit (4) de séquence comprend une vanne antiretour actionnée par pression (POCV1) qui se ferme dans le sens du premier orifice commandé (GP1), le fait que l'action de fermeture de ladite vanne antiretour (POCV1) soit éliminée étant possible sous l'influence d'une pression de commande dans un premier passage (35) de pression de commande associé qui est en communication avec le second orifice commandé (GP2).

12. Ensemble de vannes selon la revendication 11, dans lequel une vanne (36) de séquence est incorporée dans le premier passage (35) de pression de commande et s'ouvre si la pression du côté du second orifice commandé (GP2) dépasse une valeur de pression définie, de sorte que la vanne antiretour (POCV1) s'ouvre alors.

13. Ensemble de vannes selon la revendication 12, dans lequel on trouve une vanne antiretour (37) agencée en parallèle avec la vanne (36) de séquence afin de permettre à un liquide de s'écouler en retour en sortie du passage (35) de pression de commande entre la vanne (36) et le piston (53) de commande de la vanne antiretour (POCV1) si le second orifice commandé (GP2) est relié au réservoir (12).

14. Ensemble de vannes selon une ou plusieurs des revendications précédentes, dans lequel le second circuit (6) de séquence actionné par pression comprend une vanne antiretour actionnée par pression (POCV2) qui se ferme dans le sens du premier orifice commandé (GP2), et dans lequel l'action de fermeture de ladite vanne antiretour (POCV2) peut être éliminée sous l'influence d'une pression de commande dans un second passage (40) de pression de commande associé qui est en communication avec le premier orifice commandé (GP1).

15. Ensemble de vannes selon la revendication 13, dans lequel une vanne (41) de séquence est incorporée dans le second passage (40) de pression de commande et s'ouvre si la pression du côté du premier orifice commandé (GP1) dépasse une valeur de pression définie, de sorte que la vanne antiretour (POCV2) s'ouvre alors.

16. Ensemble de vannes selon la revendication 15, dans lequel on trouve une vanne antiretour (42) agencée en parallèle avec la vanne (41) de séquence pour permettre à un liquide de s'écouler en retour en sortie du passage (40) de pression de commande entre la vanne (41) et le système (54) de commande de la vanne antiretour (POCV2) si l'orifice commandé (GP1) est relié au réservoir (12).

17. Ensemble de vannes selon la revendication 12, 13, 15 ou 16, dans lequel une vanne (36, 41) de séquence comporte un corps coulissant (49, 48) pourvu d'une pointe conique du côté avant, lequel peut fermer une ouverture traversante du passage (35, 40) de pression de commande associé, la partie de la pointe conique qui fait saillie dans l'ouverture traversante formant, dans chaque cas, une surface de pression d'ouverture du corps coulissant (49, 48).

18. Ensemble de vannes selon la revendication 17, dans lequel, du côté arrière, un ressort (51, 52) appuie contre le corps coulissant (49, 48) de la vanne de séquence, et dans lequel le côté arrière de chaque corps coulissant (49, 48) forme également une surface de pression de fermeture, la surface de pression de fermeture du corps coulissant (49) de la première vanne (36) de séquence étant en communication avec le premier orifice commandé (GP1), et la surface de pression de fermeture du corps coulissant de la seconde vanne (41) de séquence étant en communication avec le second orifice commandé (GP2).

19. Ensemble de vannes selon l'une quelconque des revendications 12, 13, 15 à 18, dans lequel la vanne antiretour (POCV1, POCV2) comprend un piston (53, 54) de commande qui est soumis, d'un côté, à une charge par la pression hydraulique du passage (35, 40) de pression de commande associé si une vanne (36, 41) de séquence qui y est incorporée s'ouvre.

20. Ensemble de vannes selon la revendication 19, dans lequel la vanne antiretour (POCV1, POCV2) comprend un corps (55, 56) de vanne qui est pressé vers son siège par un ressort et pressé hors de son siège au moyen d'un piston (53, 54) de commande associé pour ainsi éliminer l'action de vanne antiretour.

21. Dispositif d'actionnement hydraulique pour une charrue réversible, comprenant un ensemble de vannes selon une ou plusieurs des revendications précédentes.
